# EUROPÄISCHE PATENTSCHRIFT

(11) **EP 2 691 998 B1**
(45) Veröffentlichungstag und Bekanntmachung des Hinweises auf die Patenterteilung: **10.12.2014**
(21) Anmeldenummer: 12711786.9
(22) Anmeldetag: 24.03.2012
(51) Int. Cl.: H01M 2/10, H01M 2/20

(54) **BATTERIE FÜR EIN KRAFTFAHRZEUG**
BATTERY FOR A MOTOR VEHICLE
BATTERIE POUR VÉHICULE AUTOMOBILE

(30) Priorität: 31.03.2011 DE 102011015621
(43) Veröffentlichungstag der Anmeldung: 05.02.2014
(73) Patentinhaber: Audi AG, 85045 Ingolstadt (DE)
(72) Erfinder: FEES, Heiner, 74321 Bietigheim-Bissingen (DE)
(74) Vertreter: Herbst, Matthias Heinz
(86) Internationale Anmeldenummer: PCT/EP2012/001301
(87) Internationale Veröffentlichungsnummer: WO 2012/130423

(56) Entgegenhaltungen:
- WO-A2-2010/019764
- DE-C1- 19 725 843
- US-A1- 2005 054 240

## Beschreibung

Die Erfindung betrifft eine Batterie für ein Kraftfahrzeug, bei welcher eine Batteriezelle durch ein Halteelement in einem Gehäuse der Batterie gehalten ist.

Ein Kraftfahrzeug, wie z.B. ein Personkraftwagen, kann verschiedene Typen von Batterien aufweisen, beispielsweise eine Starter-Batterie oder eine Hochvolt-Traktionsbatterie. Im Zusammenhang mit der Erfindung ist mit dem Begriff Batterie ein Batterie beliebigen Typs gemeint. Unter einer Batterie wird auch eine wiederaufladbare Batterie, d.h. ein Akkumulator, verstanden.

Die Erzeugung von elektrischer Energie erfolgt in einer Batterie durch eine oder mehrere galvanische Zellen. Eine solche galvanische Zelle kann innerhalb der Batterie in einem in sich geschlossenen Behältnis bereitgestellt sein, das vorliegend als Batteriezelle bezeichnet wird. Bei der Herstellung einer Batterie werden eine oder mehrere solcher Batteriezellen in einem Gehäuse der Batterie angeordnet und über elektrische Leiter miteinander verschaltet. Anschließend wird die Batterie mit einem Gehäusedeckel verschlossen.

In einem Kraftfahrzeug können Erschütterungen und Vibrationen eine Relativbewegung der Batteriezellen bezüglich des Gehäuses und der elektrischen Leiter verursachen. Dies kann zu Reibbewegungen der Batteriezellen in dem Gehäuse oder zu einem Bruch von Lötstellen führen. Daher müssen die Batteriezellen fest in dem Batteriegehäuse gehalten sein. Um ein Ablösen der elektrischen Leiter von den Batteriezellen zu verhindern, können die elektrischen Leiter (neben einer Verlötung) zusätzlich durch mechanische Mittel gegen die Batteriezellen gedrückt sein. Um einen festen Halt der Batteriezellen in dem Gehäuse und der elektrischen Leitern an den Batteriezellen zu ermöglichen, müssen für eine entsprechende mechanische Fixierung besonders zugfeste Materialien verwendet werden, die sich auch nach einem längeren Benutzungszeitraum nicht dehnen, was sonst zu einer Lockerung des Halts der Batteriezellen in dem Gehäuse führen würde. Die Verwendung solcher Materialien führt zu hohen Herstellungskosten für eine Batterie.

Aus der DE 10 2007 010 742 A1 ist es bekannt, Batteriezellen in einem Batteriegehäuse mit einer Vergussmasse zu vergießen. Diese Art der Fixierung der Batteriezellen in dem Gehäuse weist den Nachteil auf, dass eine solche Batterie wegen der benötigten Menge an Vergussmasse verhältnismäßig schwer ist.

In der WO 2010/019764 A2 ist ein Batteriemodul beschrieben, in welchem Rundzellen in einem Magazin angeordnet sind. Das Magazin umschließt die Böden der Rundzellen und lässt die Stirnseite mit den Kontakten frei. Durch das Magazin werden die Rundzellen im Bereich der Böden durch eine Versiegelung, die beispielsweise aus Silikon gefertigt sein kann, versiegelt. Hierdurch wird das Austreten von Gasen vermieden.

In der DE 197 25 843 C1 ist ein elektrischer Kondensator beschrieben, der in einem Gehäuse mit ebenem Gehäuseboden eingebaut ist. Zur Fixierung des Kondensators dienen Befestigungsstifte, die in seitlich an einem Kühlelement angeordneten Bohrungen eingeführt sind. Der Kühlkörper kann auch mit mehreren Kondensatoren bestückt sein, was als Kondensatorbatterie bezeichnet ist.

In der US 2005/0054240 A1 ist eine Halterung für Böden von Rundzellen beschrieben, um an den Böden Temperatursensoren anzubringen. Die Halterung umfasst elastische Kappen, die um die Böden gestülpt werden können. In der Halterung ist auch ein elektrisch leitfähiges Element angeordnet, um mittels eines PTC-Effekts die Temperatur der Böden auf eine zweite Messart zu erfassen.

Es ist Aufgabe der vorliegenden Erfindung, eine leichte und kostengünstige Batterie bereitzustellen.

Die Aufgabe wird durch eine Batterie gemäß Anspruch 1 gelöst. Vorteilhafte Ausführungsformen der erfindungsgemäßen Batterie sind durch die Unteransprüche gegeben.

Die erfindungsgemäße Batterie ist für ein Kraftfahrzeug bestimmt. Sie weist als eine erste Komponente eine Batteriezelle und als eine zweite Komponente ein Halteelement auf. Durch das Halteelement ist die Batteriezelle in einem Gehäuse der Batterie gehalten. Eine der beiden Komponenten, also die Batteriezelle oder das Halteelement, weist eine Vertiefung auf, in welche ein Eingriffselement der anderen Komponente eingreift, so dass eine Bewegung der Batteriezelle bezüglich des Halteelements in zumindest eine Richtung blockiert ist. Die Vertiefung in der Batteriezelle oder dem Halteelement kann z.B. eine Nut oder eine Einkerbung umfassen. Entsprechend kann das Eingriffselement z.B. einen Vorsprung, insbesondere einen Steg oder einen Rasthaken, oder ein federndes Element, insbesondere ein Federblech oder einen geschlitzten Ring, umfassen.

Durch das Eingriffselement in der Vertiefung wird ein Formschluss zwischen der Batteriezelle und dem Halteelement gebildet, durch den keine Zugbelastung des Eingriffselements verursacht wird. Deshalb muss kein besonders zugfestes Material verwendet werden. Die erfindungsgemäße Batterie weist somit den Vorteil auf, dass das Halteelement aus einem leichten und kostengünstigen Material, z.B. einem Kunststoff, gefertigt sein kann.

Das Haltelement weist gemäß einem Aspekt der Erfindung zumindest ein Befestigungselement zum Befestigen eines elektrischen Leitelements auf. Dann kann auch das elektrische Leitelement, z:B. eine Metallplatte, durch das Halteelement in dem Batteriegehäuse gehalten sein. Indem das Halteelement sowohl die Batteriezelle als auch ein elektrisches Leitelement zum Kontaktieren der Batteriezelle hält, ergibt sich der Vorteil, dass eine Relativbewegung der Batteriezelle bezüglich des Leitelements verhindert ist, wodurch eine kostengünstige Maßnahme zur Vermeindung einer Unterbrechung der elektrischen Verbindung zwischen dem Leitelement und der Batteriezelle z.B. bei Rüttelbewegungen der Batterie aufgezeigt ist.

Das Befestigungselement umfasst bevorzugt einen Stift zum Aufstecken des Leitelements. Durch plastisches Verformen des Stifts, beispielsweise durch Verstemmen, kann in vorteilhafter Weise eine dauerhafte und zuverlässige Verbindung des Leitelements mit dem Halteelement gebildet werden. Eine solche Verbindung kann auch besonders kostengünstig bereitgestellt werden.

Die erfindungsgemäße Batterie weist gemäß der Erfindung mehrere Batteriezellen des genannten Typs auf. In diesem Zusammenhang ergibt sich ein Vorteil, wenn das Halteelement als ein Magazin ausgebildet ist, das in dem Gehäuse befestigt ist und durch welches eine Mehrzahl von Batteriezellen in dem Gehäuse gehalten ist. Mittels eines solchen Magazins ist eine einfache Montage einer Batterie möglich, wodurch sich geringe Herstellungskosten der Batterie ergeben.

Mittels zumindest zweier Magazine wird ein weiterer Vorteil erlangt, indem zumindest eines einen Vorsprung aufweist, durch welchen eine in dem anderen Magazin befindliche Batteriezelle gestützt ist. Durch die gegenseitige Stützung der Magazine sind die Batteriezellen besonders zuverlässig in ihren jeweiligen Magazinen gehalten.

Die erfindungsgemäße Batterie wird in vorteilhafter Weise weitergebildet, indem die Bewegung quer, insbesondere senkrecht, zu einer Eingriffsrichtung des Eingriffselements in die Vertiefung blockiert ist. Dadurch ergibt sich der Vorteil, dass das Eingriffselement bei einer Kraftbeaufschlagung der Batteriezelle überwiegend durch Scherkräfte belastet ist, die von einer Vielzahl kostengünstiger Materialen besonders gut abgeleitet werden kann, ohne dass es dabei (auch über einen langen Zeitraum hinweg) zu einer Veränderung der Form des Eingriffselements kommt.

Ein weiterer Vorteil ergibt sich, wenn die Batteriezelle in dem Halteelement durch eine Schnappverbindung gehalten ist. Dies ermöglicht eine besonders einfache Montage der Batterie. Zudem ist durch die elastischen Komponenten der Schnappverbindung gewährleistet, dass die Batteriezelle auch durch Vibrationen in ihrer Halterung nicht lose gerüttelt wird.

Die Batteriezelle ist bevorzugt eine Rundzelle. Als eine Vertiefung für einen Eingriff eines Eingriffselements des entsprechenden Halteelements kann die Rundzelle eine Ringnut aufweisen. Rundzellen mit einer Ringnut als Vertiefung weisen den Vorteil auf, dass sie durch das Halteelement gehalten werden können und dabei Anschlusspole der Rundzelle frei zugänglich bleiben.

üblicherweise weist eine Rundzelle eine zylindrische Grundform auf, durch welche eine Symmetrieachse der Rundzelle definiert ist. Die Bewegung der Rundzelle ist dann mittels des Eingriffselements bevorzugt in Richtung entlang der Symmetrieachse blockiert. In diese Richtung ist es mit anderen mitteln besonders schwierig, einen sicheren Halt einer Rundzelle zu gewährleisten, ohne dabei die Anschlusspole zu verdecken.

Eine andere vorteilhafte Weiterbildung der erfindungsgemäßen Batterie sieht vor, dass die Batteriezelle zumindest teilweise von einer Wand des Haltelements umgeben ist. Mit anderen Worten umgreift das Halteelement gemäß dieser Weiterbildung die Batteriezelle in einer Ebene zumindest teilweise. Indem das Haltelemente die Batteriezelle zumindest abschnittsweise umgreift, ist zusätzlich eine Bewegung der Batteriezelle bezüglich des Halte-elements in der Ebene sowie für zwei rotatorische Freiheitsgrade blockiert. Damit ist die Batteriezelle nahezu vollständig in ihrer Lage bezüglich des Halteelements festgelegt. Für einen festen Sitz der Batteriezelle in dem Batteriegehäuse muss somit in vorteilhafter Weise nur noch das Halteelement selbst fest mit dem Gehäuse verbunden sein, was mit kostengünstigen Mitteln, z.B. durch Verschweißen, möglich ist. Die Batteriezelle selbst ist dann durch das Halteelement in dem Gehäuse fixiert.

Bevorzugt ist zwischen dem Halteelement und der Batteriezelle ein Mittel zum Blockieren einer Drehbewegung der Batteriezelle bezüglich des Halteelements vorgesehen. Dann kann die Batteriezelle in dem Halteelement nicht um ihre eigene Achse rotieren. Das Mittel kann beispielsweise einen Klebstoff oder eine Gummierung oder eine Schweißverbindung umfassen.

Die Erfindung wird im folgenden anhand von Ausführungsbeispielen näher erläutert. Dazu zeigt:
- Fig. 1: eine perspektivische Darstellung einer Batterie gemäß einer Ausführungsform der Erfindung während der Montage;
- Fig. 2: eine perspektivische Darstellung eines Magazins mit Rundzellen, das in die in Fig. 1 gezeigte Batterie eingebaut ist;
- Fig. 3: eine Darstellung des Magazins aus Fig. 2 ohne Rundzellen.

Die Ausführungsbeispiele stellen bevorzugte Ausführungsformen der Erfindung dar.

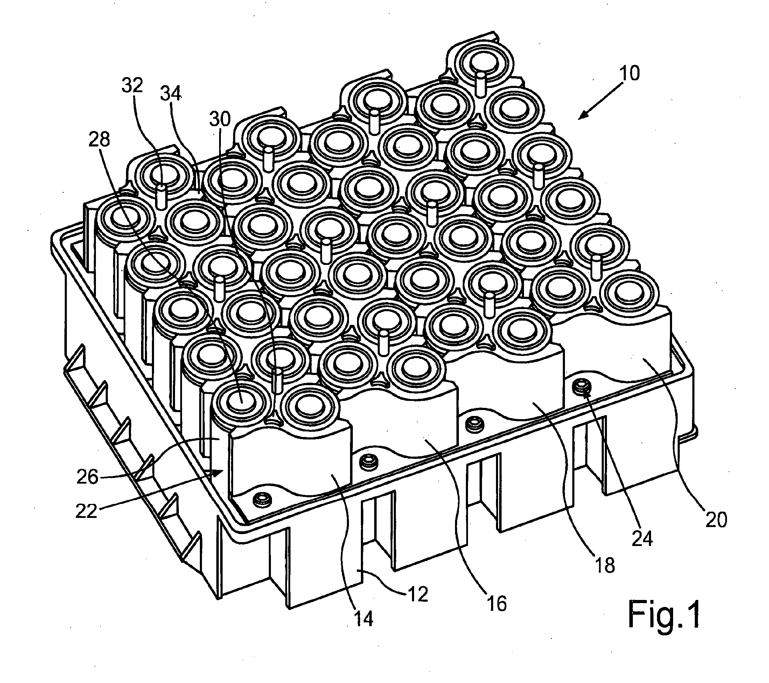

In Fig. 1 ist eine Batterie 10 für einen Personenkraftwagen dargestellt. Das in Fig. 1 gezeigte Beispiel zeigt die Batterie 10 während einer Montage derselben. Die Batterie 10 ist noch nicht vollständig zusammengebaut. In einen Gehäuseboden 12 sind Magazine 14, 16, 18, 20 eingesetzt, von denen jedes elf Rundzellen trägt. In Fig. 1 ist der Übersichtlichkeit halber nur eine einzelne Rundzelle 22 mit einem Bezugszeichen versehen. Genauso sind nur Komponenten der Rundzelle 22 mit einem Bezugszeichen versehen. Die übrigen Rundzellen weisen entsprechende Komponenten auf.

Die Magazine 14 bis 20 sind mit dem Gehäuseboden 12 an Schweißstellen verschweißt, von denen in Fig. 1 der Übersichtlichkeit halber nur eine Schweißstelle 24 mit einem Bezugszeichen gekennzeichnet ist.

Im Folgenden ist das Prinzip der Befestigung und der Kontaktierung der Rundzellen in der Batterie 10 am Beispiel der Rundzelle 22 erläutert.

Das Magazin 14 trägt die Rundzelle 22. Dadurch ist es nicht nötig, die Rundzelle 22 durch weitere Maßnahmen, wie z.B. durch Anpressen an den Gehäuseboden 12 mittels eines Bügels oder dergleichen, gegen ein Verrutschen in dem Gehäuseboden 12 zu sichern.

Eine elektrische Kontaktierung der Rundzelle 22 in der Batterie 10 einfach möglich. Ein Zellenbecher 26 ist aus einem elektrisch leitenden Material und bildet einen Minus-Pol der Rundzelle 22. Ein metallener Deckel 28 der Rundzelle 22 bildet einen Plus-Pol. Sowohl ein in Fig. 1 oberer Rand des Zellbechers 26 als auch der Deckel 28 sind von (in Fig. 1) oben her erreichbar. Das Magazin 14 verdeckt die beiden Anschlusspole der Rundzelle 22 in diese Richtung nicht. Mittels eines (nicht dargestellten) Geräts zum Verdrahten der Batterie 10 kann deshalb in einem automatisierten Fertigungsschritt der Zellenbecher 26 mit einem elektrischen Kontaktfeld 30 des Magazins 14 verdrahtet werden. In einem weiteren, in Fig. 1 nicht illustrierten Montageschritt wird auf die Magazine 14 bis 20 eine elektrisch leitende Platte aufgesetzt, um die Plus-Pole der Rundzellen miteinander elektrisch zu verbinden. Diese Platte wird dazu auf Stifte 32 der Magazine 14 bis 20 aufgesteckt. Von den Stiften 32 ist in Fig. 1 der Übersichtlichkeit halber nur einer mit einem Bezugszeichen versehen. Nachdem die Platte auf die Stifte 32 aufgesteckt ist, werden die Stifte 32 unter Verwendung von heißem Gas verstemmt, so dass die Platte auf den Magazinen 14 bis 20 fixiert ist. Die Platte muss dabei durch die Stifte 32 mit einer nur verhältnismäßig geringen Kraft auf den Magazinen 14 bis 20 gehalten werden. Daher wirken nur geringe Zugkräfte auf die Stifte 32.

Die Magazine 14 bis 20 weisen jeweils mehrere Vorsprünge auf, von denen in Fig. 1 nur ein Vorsprung 34 mit einem Bezugszeichen versehen ist. Durch den Vorsprung 34 des Magazins 14 wird verhindert, dass eine Rundzelle des Magazins 16 aus diesem herausrutscht. Insgesamt wird durch die Vorsprünge ein zusätzlicher Halt für die Rundzellen in der Batterie 10 bereitgestellt.

Wie im Folgenden näher erläutert ist, sind die Rundzellen fest in den Magazinen 14 bis 20 gehalten, ohne dass dazu eine große Kraft auf die Rundzellen ausgeübt wird. Daher ist es möglich, bei der Herstellung der Batterie 10 auf ein Material für den Gehäuseboden 12 und die Magazine 14 bis 20 zu verzichten, das es ermöglichen würde, eine größere Kraft auf die Rundzellen auszuüben. In dem Beispiel sind der Gehäuseboden 12 und die Magazine 14 bis 20 aus einem Kunststoff gefertigt.

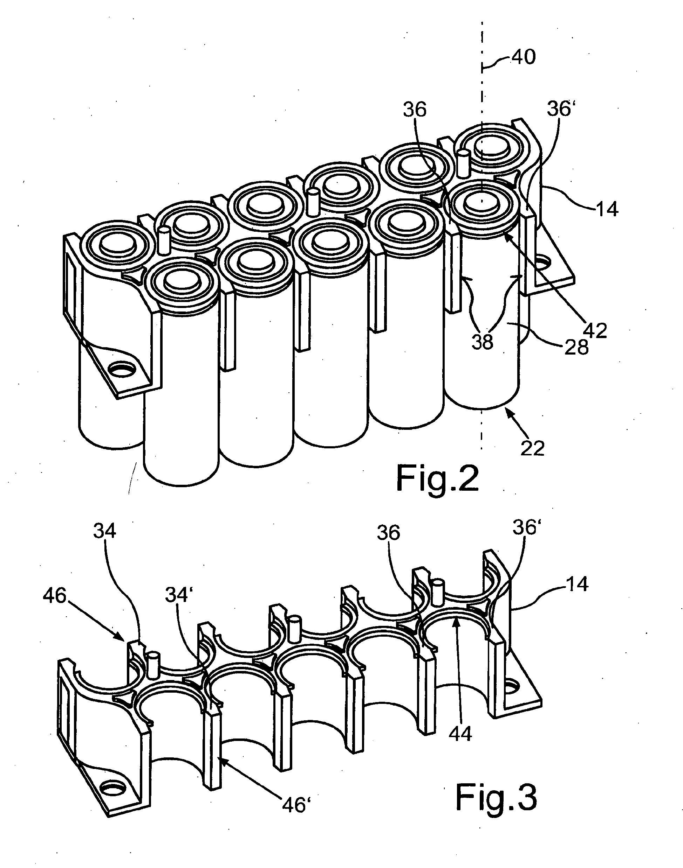

In Fig. 2 ist für diese Erläuterung noch einmal das Magazin 14 mit den darin gehaltenen Rundzellen (auch mit der Rundzelle 22) gezeigt. In Fig. 3 ist das Magazin 14 ohne die Rundzellen gezeigt.

Die Rundzelle 22 ist durch elastische Wände 36, 36' des Magazins 14 gehalten. Die Rundzelle 22 ist zum Einsetzen in das Magazin 14 gegen keilförmig zulaufende Flächen 38 gedrückt worden, so dass die Wände 36, 36' (durch eine elastische Verformung) auseinander bewegt wurden und die Rundzelle in ihre in Fig. 2 gezeigte Lage eingeschnappt ist. Die Wände 36, 36' bilden insgesamt zusammen mit dem Zellenbecher 28 eine Schnappverbindung. Wenn alle Rundzellen einer Zeile des Magazins 14 eingesetzt sind, sind die Wände 36, 36' so weit mechanisch elastisch verformt, dass die Rundzelle 22 besonders fest in dem Magazin 14 gehalten ist.

Die Rundzelle 22 ist in dem Magazin 14 auch gegen ein Verrutschen in Richtung einer Längsachse 40 fixiert. Dazu weist der Zellenbecher 26 eine. Ringnut 42 auf, in die ein Steg 44 des Magazins 14 greift. Die Rundzelle 22 ist so gegen ein Herausrutschen aus dem Magazin 14 entlang ihrer Längsachse 40 gesichert. Der Steg 44 greift in einer bezüglich einer zylindrischen Grundform der Rundzelle 22 radialen Richtung in die Ringnut 42 ein, d.h. senkrecht zur Längsachse 40. Wirkt eine Kraft auf die Rundzelle 22 in Richtung parallel zu der Längsachse 40, so wird diese Kraft als eine Scherkraft in dem Steg 44 auf die Wände 36, 36' übertragen. Diese Scherkraft verformt den Steg 44 auch dann nicht, wenn sie häufig auf den Steg 44 ausgeübt wird. Dies kann beispielsweise der Fall sein, wenn die Batterie 10 in einen Personenkraftwagen eingebaut ist und die Batterie während einer Fahrt des Wagens gerüttelt wird. Durch die Formbeständigkeit des Stegs 44 ist gewährleistet, dass die Rundzelle 22 über die gesamte Lebensdauer der Batterie 10 hinweg fest in dem Magazin 14 sitzt.

Anstelle des Stegs 44 kann bei einem anderen Magazin auch vorgesehen sein, dass eine Klammer aus Metall in die Wände 36, 36' eingelassen ist. Die Klammer weist dabei die Form eines Ringsegments ähnlich wie der Steg 44 auf. Eine solche Klammer dient dann als Eingriffselement des Magazins 14, welches ebenfalls zusammen mit einer Ringnut einer Rundzelle einen Formschluss bilden kann.

Damit durch den Vorsprung 34 des Magazins 14 die Rundzelle des benachbarten Magazins 16 gestützt werden kann, weist der Vorsprung 34 einen flachen Bereich 46 auf, der in Fig. 3 am Beispiel eines flachen Bereichs 46' eines weiteren Vorsprungs 34' noch einmal besser erkennbar dargestellt ist. Der Vorsprung 34 berührt die Rundzelle des benachbarten Magazins 16 in dem flache Bereich 46. Dabei ist eine Berührfläche des Vorsprungs 34 mit der Rundzelle so groß und daher ein Druck des Vorsprungs gegen die Rundzelle so gering, dass eine Isolierschicht des Zellenbechers der Rundzelle bei einer eventuellen Relativbewegung des Vorsprungs 34 zur Rundzelle, z.B. bei einer Fahrt des Personenkraftwagens, nicht beschädigt wird.

Durch die Beispiele ist gezeigt, wie in einer Batterie Rundzellen durch Magazine zuverlässig gehalten sind.

## Patentansprüche

1. Batterie (10) für ein Kraftfahrzeug, welche als eine erste Komponente eine Batteriezelle (22) und als eine zweite Komponente ein Halteelement (14 bis 20) aufweist, durch welches die Batteriezelle (22) in einem Gehäuse (12) der Batterie (10) gehalten ist, wobei eine der beiden Komponenten eine Vertiefung (42) aufweist, in welche ein Eingriffselement (44) der anderen Komponente eingreift, so dass eine Bewegung der Batteriezelle (22) bezüglich des Halteelements (14 bis 20) in zumindest eine Richtung (40) blockiert ist, und wobei das Halteelement (14 bis 20) als ein Magazin (14 bis 20) ausgebildet ist, das in dem Gehäuse (12) befestigt (24) ist und durch welches eine Mehrzahl von Batteriezellen (22) in dem Gehäuse (12) gehalten ist,
**dadurch gekennzeichnet, dass**
zumindest zwei Magazine (14 bis 20) vorgesehen sind, von denen zumindest eines (14) einen Vorsprung (34) aufweist, durch welchen eine in dem anderen Magazin (16) befindliche Batteriezelle gestützt ist.

2. Batterie nach Anspruch 1, wobei die Bewegung quer zu einer Eingriffsrichtung des Eingriffselements (44) in die Vertiefung (42) blockiert ist.

3. Batterie nach Anspruch 1 oder 2, wobei die Vertiefung (42) eine Nut (42) oder eine Einkerbung umfasst.

4. Batterie nach einem der vorhergehenden Ansprüche, wobei das Eingriffselement (44) einen Vorsprung oder ein federndes Element umfasst.

5. Batterie nach Anspruch 4, wobei das Eingriffselement (44) als einen Vorsprung einen Steg (44) oder einen Rasthaken umfasst.

6. Batterie nach Anspruch 4, wobei das Eingriffselement (44) als ein federndes Element ein Federblech oder einen geschlitzten Ring umfasst.

7. Batterie nach einem der vorhergehenden Ansprüche, wobei die Batteriezelle (22) in dem Halteelement (14 bis 20) durch eine Schnappverbindung gehalten ist.

8. Batterie nach einem der vorhergehenden Ansprüche, wobei die Batteriezelle (22) eine Rundzelle (22) ist, die eine Ringnut (42) als die Vertiefung aufweist.

9. Batterie nach Anspruch 8, wobei die Rundzelle (22) eine zylindrische Grundform aufweist, durch welche eine Symmetrieachse (40) der Rundzelle (22) definiert ist, und die Bewegung der Rundzelle (22) in Richtung entlang der Symmetrieachse (40) blockiert ist.

10. Batterie nach einem der vorhergehenden Ansprüche, wobei die Batteriezelle (22) von einer Wand (36, 36') des Haltelements (14 bis 20) zumindest teilweise umgeben ist.

11. Batterie nach einem der vorhergehenden Ansprüche, wobei zwischen dem Halteelement (14 bis 20) und der Batteriezelle (22) ein Mittel zum Blockieren einer Drehbewegung der Batteriezelle (22) bezüglich des Halteelements (14 bis 20) vorgesehen ist.

12. Batterie nach Anspruch 11, wobei das Mittel einen Klebstoff oder eine Gummierung oder eine Schweißverbindung umfasst.

13. Batterie nach einem der vorhergehenden Ansprüche, wobei das Halteelement (14 bis 20) zumindest ein Befestigungselement (32) zum Befestigen eines elektrischen Leitelements zum Kontaktieren der Batteriezellen aufweist.

14. Batterie nach Anspruch 13, wobei das Befestigungselement (32) einen Stift (32) zum Aufstecken des Leitelements umfasst.

## Claims

1. Battery (10) for a motor vehicle, comprising a battery cell (22) as a first component and a holder element (14 to 20) as a second component, by means of which element the battery cell (22) is held in a housing (12) of the battery (10), one of the two components having a recess (42) in which an engagement element (44) of the other component engages such that movement of the battery cell (22) relative to the holder element (14 to 20) is blocked in at least one direction (40), and the holder element (14 to 20) being formed as a magazine (14 to 20) that is fastened (24) in the housing (12) and by means of which a plurality of battery cells (22) is held in the housing (12), **characterised in that** at least two magazines (14 to 20) are provided, at least one (14) of which has a projection (34) by means of which a battery cell located in a different magazine (16) is supported.

2. Battery according to claim 1, wherein the movement transverse to an engagement direction of the engagement element (44) into the recess (42) is blocked.

3. Battery according to either claim 1 or claim 2, wherein the recess (42) comprises a groove (42) or a notch.

4. Battery according to any of the preceding claims, wherein the engagement element (44) comprises a projection or a resilient element.

5. Battery according to claim 4, wherein the engagement element (44) comprises a web (44) or a latching hook as a projection.

6. Battery according to claim 4, wherein the engagement element (44) comprises a spring sheet or a slotted ring as a resilient element.

7. Battery according to any of the preceding claims, wherein the battery cell (22) is held in the holder element (14 to 20) by means of a snap-in connection.

8. Battery according to any of the preceding claims, wherein the battery cell (22) is a round cell (22) which has an annular groove (42) as the recess.

9. Battery according to claim 8, wherein the round cell (22) has a cylindrical basic shape, through which an axis of symmetry (40) of the round cell (22) is defined, and the movement of the round cell (22) along the axis of symmetry (40) is blocked.

10. Battery according to any of the preceding claims, wherein the battery cell (22) is surrounded at least in part by a wall (36, 36') of the holder element (14 to 20).

11. Battery according to any of the preceding claims, wherein a means for blocking a rotational movement of the battery cell (22) relative to the holder element (14 to 20) is provided between the holder element (14 to 20) and the battery cell (22).

12. Battery according to claim 11, wherein the means comprises an adhesive, a rubber coating or a welded connection.

13. Battery according to any of the preceding claims, wherein the holder element (14 to 20) has at least one fastening element (32) for fastening an electrical conducting element for contacting the battery cells.

14. Battery according to claim 13, wherein the fastening element (32) comprises a pin (32) for mounting the conducting element.

## Revendications

1. Batterie (10) pour véhicule automobile, qui présente comme premier composant un élément de batterie (22) et comme second composant un élément de retenue (14 à 20), par lequel l'élément de batterie (22) est soutenu dans un boîtier (12) de la batterie (10), dans laquelle l'un des deux composants présente un renfoncement (42), dans lequel un élément de prise (44) de l'autre composant s'engage de sorte qu'un mouvement de l'élément de batterie (22) soit bloqué par rapport à l'élément de retenue (14 à 20) dans au moins une direction (40), et dans laquelle l'élément de retenue (14 à 20) est conformé en magasin (14 à 20), qui est fixé (24) dans le boîtier (12) et qui retient une pluralité d'éléments de batterie (22) dans le boîtier (12),
**caractérisée en ce que**
il est prévu deux magasins (14 à 20) parmi lesquels au moins l'un (14) présente une saillie (34) par laquelle un élément de batterie se trouvant dans l'autre magasin (16) est soutenu.

2. Batterie selon la revendication 1, dans laquelle le mouvement est bloqué transversalement à une direction d'engagement de l'élément de prise (44) dans le renfoncement (42).

3. Batterie selon la revendication 1 ou la revendication 2, dans laquelle le renfoncement (42) comprend une encoche (42) ou une rainure.

4. Batterie selon l'une quelconque des revendications précédentes, dans laquelle l'élément de prise (44) comprend une saillie ou un élément à ressort.

5. Batterie selon la revendication 4, dans laquelle l'élément de prise (44) comprend comme saillie une nervure (44) ou un crochet d'arrêt.

6. Batterie selon la revendication 4, dans laquelle l'élément de prise (44) comprend comme élément à ressort une tôle élastique ou une bague fendue.

7. Batterie selon l'une quelconque des revendications précédentes, dans laquelle l'élément de batterie (22) est retenu dans l'élément de retenue (14 à 20) par un assemblage à encliquetage.

8. Batterie selon l'une quelconque des revendications précédentes, dans laquelle l'élément de retenue (22) est un élément rond (22) qui présente une encoche annulaire (42) comme renfoncement.

9. Batterie selon la revendication 8, dans laquelle l'élément rond (22) présente une forme de base cylindrique par laquelle un axe de symétrie (40) de l'élément rond (22) est défini et le mouvement de l'élément rond (22) est bloqué dans la direction le long de l'axe de symétrie (40).

10. Batterie selon l'une quelconque des revendications précédentes, dans laquelle l'élément de batterie (22) est entouré au moins en partie par une paroi (36, 36') de l'élément de retenue (14 à 20).

11. Batterie selon l'une quelconque des revendications précédentes, dans laquelle entre l'élément de retenue (14 à 20) et l'élément de batterie (22) est prévu un moyen pour bloquer un mouvement rotatif de l'élément de batterie (22) par rapport à l'élément de retenue (14 à 20).

12. Batterie selon la revendication 11, dans laquelle le moyen est une colle ou un gommage ou encore une jonction soudée.

13. Batterie selon l'une quelconque des revendications précédentes, dans laquelle l'élément de retenue (14 à 20) présente au moins un élément de fixation (32) pour fixer un élément conducteur de l'électricité destiné à venir en contact avec les éléments de batterie.

14. Batterie selon la revendication 13, dans laquelle l'élément de fixation (32) comprend une broche (32) pour monter l'élément de conduction.
